(19) Europäisches Patentamt
European Patent Office
Office européen des brevets

(11) **EP 3 794 565 B1**

(12) **EUROPEAN PATENT SPECIFICATION**

(45) Date of publication and mention
of the grant of the patent:
**08.07.2026 Bulletin 2026/28**

(21) Application number: **19722145.0**

(22) Date of filing: **10.05.2019**

(51) International Patent Classification (IPC):
**G07F 13/00** (2006.01)    **A47J 31/06** (2006.01)
**A47J 31/36** (2006.01)

(52) Cooperative Patent Classification (CPC):
**G07F 13/00; A47J 31/3642;** A47J 31/3647;
Y02W 90/10

(86) International application number:
**PCT/EP2019/062022**

(87) International publication number:
**WO 2019/219523 (21.11.2019 Gazette 2019/47)**

(54) **APPARATUS FOR DISPENSING INDIVIDUAL PORTIONS OF BEVERAGE PRECURSOR FOR PREPARING A BEVERAGE THEREFROM**

VORRICHTUNG ZUR ABGABE EINZELNER PORTIONEN EINES GETRÄNKEVORPRODUKTS ZUR ZUBEREITUNG EINES GETRÄNKS DARAUS

APPAREIL DE DISTRIBUTION DE PORTIONS INDIVIDUELLES DU PRÉCURSEUR DE BOISSON POUR PRÉPARER UNE BOISSON À PARTIR DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2018 EP 18172041**

(43) Date of publication of application:
**24.03.2021 Bulletin 2021/12**

(73) Proprietor: **Société des Produits Nestlé S.A.**
**1800 Vevey (CH)**

(72) Inventors:
• **CHAPUIS, Valentin**
**2300 La Chaux-de-Fonds (CH)**
• **ROMAND, Damien**
**38000 Grenoble (FR)**
• **OBLIGER, Nicolas**
**25170 Franey (FR)**
• **MAGATTI, Marco**
**1010 Lausanne (CH)**

(74) Representative: **Rosolen-Delarue, Katell**
**Société des Produits Nestlé S.A.**
**Avenue Nestlé 55**
**1800 Vevey (CH)**

(56) References cited:
EP-A1- 0 457 708     WO-A1-02/100225
WO-A1-97/17006     WO-A2-2013/169134
GB-A- 2 266 228     GB-A- 2 362 634
GB-A- 939 813      US-A- 3 181 734
US-A- 3 213 777     US-A- 3 340 789
US-A- 3 356 011     US-A- 3 607 297
US-A- 3 686 820     US-A- 4 008 657
US-A- 5 520 093     US-A1- 2018 029 771

## Description

Field of the invention:

The invention relates to an apparatus for dispensing individual portions of beverage precursor stored as a packaging band, such as roast-and-ground coffee compacted pieces, adapted for the preparation of a beverage in a beverage preparation device. The invention also relates to a system comprising an apparatus for dispensing individual portions of beverage precursors and a package containing such portions.

Background:

It is known that coffee is sold in airtight packages to protect it from contact with air that would cause quick oxidation and loss of aromas. The field of beverage closure capsules has developed tremendously essentially because each coffee portion can be well protected by a suitable gastight, functional package until coffee is extracted in a suitable coffee machine.

US3607297 relates to a package formed of a strip comprising two foils hermetically sealed together to form pockets in which are stored individual disc-shaped portions of a beverage-producing substance or precursor. The pocket establishes a gasket in the beverage production machine and the two foils are perforated for respectively water and beverage to flow in and out of the pocket. The strip is designed to supply the pockets directly in the beverage machine. For this, the pockets are arranged for maintaining the beverage-producing substance inside the pocket during and after preparation.

WO93/20737 relates to a beverage dispenser with a system for entraining a strip of tea filter bags. The strip is passed through the brewing chamber but the tea dose is not removed. The amount packaging used is also very high and the disposal or recycling operation is not easy as the organic waste and the packaging material are mixed after use.

GB2362634A discloses a plurality of sachets linked together by tractor drive bands to form a continuous web. The same problems as for WO93/20737 are met.

EP1541070B relates to a dispenser mechanism for sealed capsules stored in a pack in the shape of a continuous belt wound in the form of a spiral. Each pack consists of a plurality of sealed capsules received at regular intervals on the edges of the belt.

US9241499B2 relates to a method for automatically producing a coffee preparation by means of a coffee preparation device comprising inserting a cartridge which is prefilled with compressed ground coffee powder, metering a portion of powder by axially displacing the entire powder supply by means of a plunger. However, a disadvantage is that the cartridge must be sealed after removing the powder portion and must remain sealed until a further powder portion is to be removed from the powder supply of the cartridge. This require a complicated sealing interface between the machine and the cartridge which is not disclosed in the patent.

US3686820A discloses an apparatus for separating disc-like or other nestable articles regrouped (using a plastic film) into a plurality of spaced stacks of interconnected articles, accommodating removal of each of the stacks of articles, and delivering each of the stacks of articles in end-to-end relationship for movement along a second path.

Therefore, the present invention alleviates the problems of the prior art by providing a portion dispensing solution that preserves freshness and integrity of the beverage precursor, reduces packaging and facilitates the disposal of the used organic and packaging materials (optionally, it offers a full compostable solution).

Summary of the invention:

In a first aspect, the invention relates to a beverage portion dispenser for receiving a flexible portioning band containing a plurality of individually sealed beverage precursor portions for the preparation of a beverage according to claim 1.

Preferred embodiments of the present invention are disclosed in claims 2-8.

The proposed dispenser comprises:

- a receiving seat for receiving the portioning band;
- means for individually collecting and dispensing the beverage precursor portions to a dispensing area,

wherein the collecting and dispensing means comprises:

- a portion drive assembly arranged for receiving a part of the portioning band which sealingly encloses spaced apart beverage precursor portions, for individually taking a number of sealed beverage precursor portions in charge and for moving said sealed portions step-wisely;
- a separating assembly for individually separating said portions from the portioning band as they are moved to the separating assembly by the portion drive assembly.

An advantage of the dispenser of the invention is that it handles gently the beverage precursor portions which may be brittle to maintain their integrity during dispensing. For example, the beverage precursor portions may be compacted powdered pieces such as made of roast-and-ground coffee. Contrary to prior art, the package is not moved entirely to the dispenser but only a part of it is moved as the package comprises a flexible portioning band. The freshness of the product is maintained because the beverage precursor is kept sealed by the portioning band until it is separated therefrom and dispensed. The rest of the portioning band remains sealed and protected against air and light.

The portion drive assembly further comprises a driving member comprising portion receiving cavities shaped for individually catching a number of portions and for moving the respective part of the band containing the caught portions to the separating assembly. For example, the receiving cavity may have a circular opening which matches the cross-section of the beverage precursor portions which may be compacted and of substantially spherical shape. The number of portions that may be caught by the portion drive assembly to ensure a balance between a gentle but reliable drive of the system is preferably between 2 and 5, more preferably 3 or 4 beverage precursor portions.

The drive member specifically comprises a driving wheel with a cylindrical wall provided with portion receiving cavities spaced apart at its circumference and a motor for driving the cylindrical wall in rotation along an axis transversal to the driving direction of the portioning band. The driving member is arranged with control means to move the driving wheel incrementally or step-wisely of one step at a time to position one receiving cavity containing a beverage precursor portion next to the separating assembly.

The driving wheel also comprises positioning members arranged incrementally on the driving wheel to cooperate with at least one position sensor. Therefore, the driving wheel can be advanced from one increment at a time and this increment is determined by the position sensor. The position sensor can be mechanical, optical and or electromagnetic. The positioning members could also be omitted and the beverage precursor portions could be sensed by the position sensor instead. The driving wheel may be driven by a motor coupled to the driving wheel by a transmission system, for example a combination of a geared wheel and endless screw.

The driving wheel can be dimensioned as a function of the arrangement of the portions in the portioning band and especially in relation to the distance between the centres of the neighboring portions, the diameter of the portions and the number of portions to be received by the cavities when the band is pulled by the portion drive assembly. In particular, the radius of the driving wheel is a function of the number of receiving cavities and of the distance between the beverage precursor portions on the portioning band. With such considerations, the radius R can preferably be dimensioned by the formula:

$$R = n.(r.dp/2\pi)$$

With n represents the total number of receiving cavities. $dp$ is the diameter of a beverage precursor portion. In particular, $r$ represents the ratio of the distance $dc$ between the centre of the neighbouring portions and the diameter $dp$ of the portions. In an example, $n$ is comprised between 5 and 20, more preferably 7 and 12, most preferably 9. Preferably, the ratio $r$ is comprised between 1.7 and 2, more preferably between 1.8 and 1.9, most preferably of about 1.88.

According to claim 1, the separating assembly comprises a cutting tool for opening the portioning band at the location of each individual beverage precursor portion. The cutting tool comprises a cutter arranged for cutting at least one cutting line in the band preferably around the beverage precursor portion. In particular, the cutter may be arranged for cutting the band at a cutting line which is preferably located at the intersection between the beverage precursor portion and a sealed part of the band. The sealed part may be formed by the sealing of two packaging sheets. By cutting at the intersection, the cutter does not damage the portion as it might be brittle and would break easily into smaller pieces.

The cutter may have a hollow form with at least one arc-shaped cutting edge.

Therefore, the cutter can accommodate e.g. a spherical portion while cutting at least part of the band around it. The edge(s) of the cutter may be arranged for cutting the beverage precursor band on at least 200° or preferably about 300° about the beverage portion to provide a sufficient opening of the cavity and facilitate ejection of the beverage portion. The cutter is driven reciprocally by a motorized piston assembly between a retracted position and a cutting position. As the driving wheel is moved incrementally, the movement of the cutter is coordinated with the stepwise movement of the driving wheel to cut the band after the band has been moved of a step. Preferably, a portion sensor is provided to detect the presence of a beverage portion under the cutting tool or nearby.

The cutter may be driven via an endless screw axially connected to a motor to be moved axially or in a combined axial and rotational movement relative to the driving wheel. In a first possible mode, the cutter is moved axially and the endless screw engages in a pushing nut which is blocked in rotation in a housing but movable in linear fashion thereby moving the cutter in simple translation. In a second possible mode, the cutter is moved in a combined axial and rotational movement by the endless screw moving together with the motor in a linear fashion in a housing of the cutting tool with a stationary nut in the housing.

The cutting tool preferably comprises a pressing member coaxially mounted with the cutter to hold the portioning band on the driving wheel as the cutter cut the band. The pressing member is arranged to press the band against the driving wheel as the cutter moves reciprocally at least a short distance relative to it. As a result, the pressing member still holds the flexible band when the cutter starts being retracted.

The separating assembly may comprise an extracting member arranged for engaging against the beverage precursor portion after the band has been cut by the cutting tool. The extracting member assists the removal of the beverage precursor portions by ensures that the portions are properly detached from the band as they may adhere by vacuum and/or mechanical or material sticking effect in the thermoformed receiving cavities.

The extracting member may be formed as a stationary protruding surface positioned angularly after the cutting tool and inside the driving wheel so that when the wheel is driven in rotation and a receiving cavity filled with a portion comes in radial alignment with the extracting member, the beverage precursor portion abuts against the protruding surface and is forced outside the cavity of the driving wheel.

The apparatus may further comprise detecting and/or identifying member arranged for detecting and/or identifying at least one detection and/or identification element associated to the beverage precursor portion(s). For example, the detecting and/or identifying member is an optical reader and the detection and/or identification element is an optical element, such as a barcode, glyph or design, which is positioned on the portioning band. Preferably, an optical element is placed between two neighboring beverage precursor portions. The detection or identification element may provide information to the apparatus such as: the type of beverage precursor portions, the number of portions on the band, the counting of the beverage precursor portions on the band and any combinations thereof.

The invention may further relates to a beverage portion dispensing system comprising a dispenser as aforementioned and a package comprising at least one portioning band with beverage precursor portions individually sealed therein. Preferably, the beverage precursor portions are of spherical shape.

Brief description of the drawings:

Figure 1 shows an example of package adapted for the portioned dispensing machine of the invention;

Figure 2 shows a top plane view of one layer of the portioning band of the package of Figure 1;

Figure 3 shows a side view of the layer of Figure 2;

Figure 4 shows a side view of a package of Figure 1 when the protective casing is opened;

Figure 5 shows a side view of the protective casing of the invention;

Figure 6 shows a perspective illustration of the portion dispensing machine of the invention for individually dispensing portions from the package;

Figure 7 is a longitudinal cross-sectional view of the dispensing machine of the invention;

Figure 8 is a perspective view of the portion dispensing machine with a used casing and a used band stored separately;

Figure 9 is an enlarged cross-sectional view of the portion driving assembly of the machine;

Figure 10 is an enlarged rear view of the portion driving assembly of the machine;

Figure 11 shows a detail of the portion driving assembly;

Figure 12 is cross-sectional view of the cutting and portion removing means of the dispensing machine according to a first embodiment;

Figure 13 is cross-sectional view of the cutting and portion removing means of the dispensing machine in retracted position according to a second embodiment;

Figure 14 is cross-sectional view of the cutting and portion removing means of the dispensing machine in cutting position according to a second embodiment;

Figure 15 shows a detail of the cutting and removing means in particular during the cutting operation of the portioning band for extracting a portion;

Figure 16 shows a first mode of the cutting tool;

Figure 17 shows a second mode of the cutting tool;

Figure 18 shows a third mode of the cutting tool;

Figure 19 shows a side cross-sectional view of the portion dispensing machine in the configuration of Figure 8;

Figure 20 is a top perspective view of the portion dispensing machine in the configuration of Figure 19;

Figure 21 is a top perspective view of the portion dispensing machine after the casing is opened for receiving the used band;

Figure 22 is a front perspective view of an assembly of several beverage dispensing machines;

Figure 23 is a rear perspective view of the assembly of Figure 22.

Detailed description of a preferred mode:

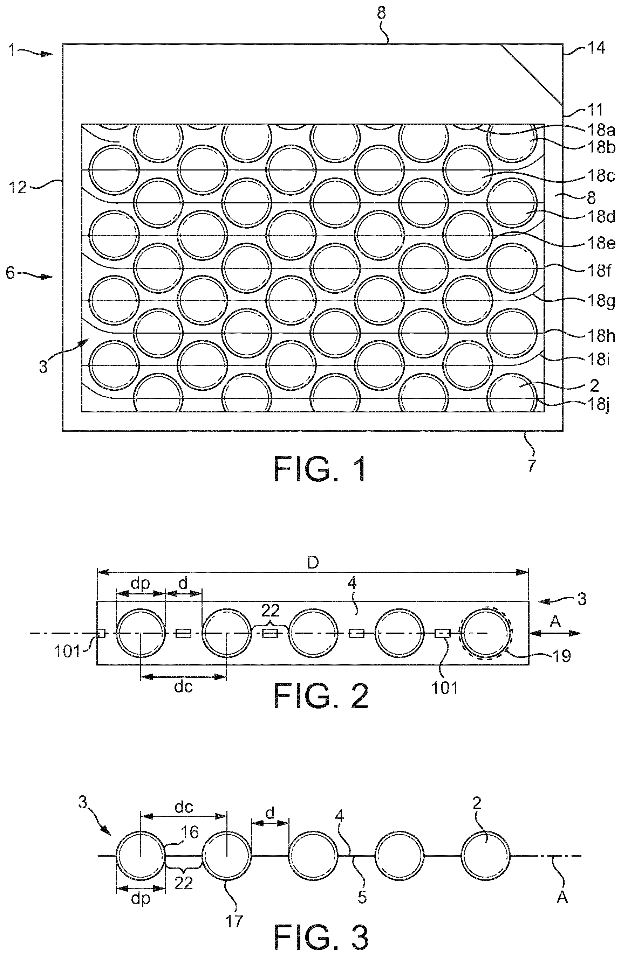

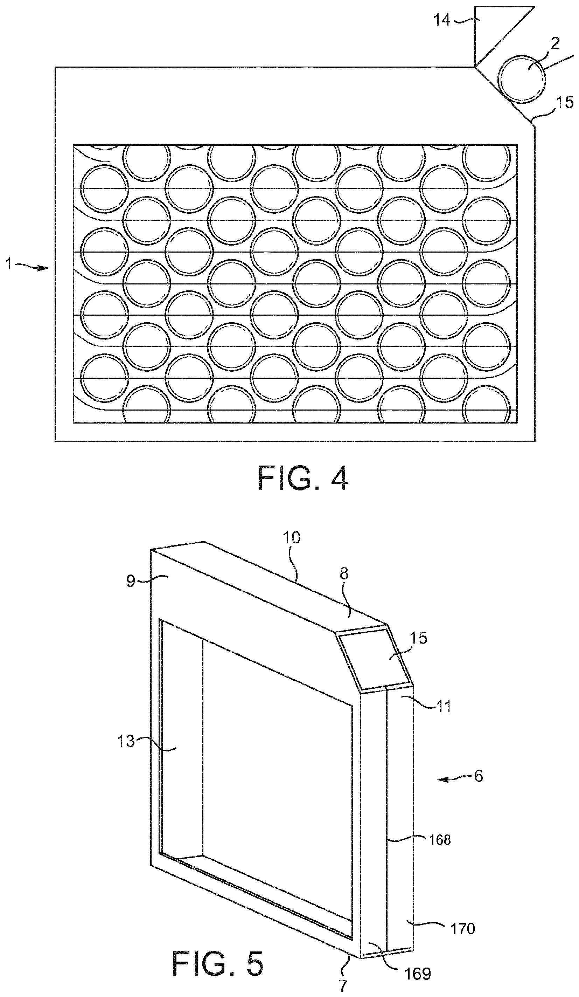

The portion package 1 of the system of the invention is illustrated in Figures 1 and 4 respectively in closed position and opened position ready for dispensing portions 2 of beverage precursor imperviously sealed in at least one band 3 formed by welded or sealed sheets 4, 5. The portions of beverage precursor may also be called "beverage precursor portions" or "beverage portions" in the rest of the description.

The package may comprise a protective casing 6 that may be relatively rigid to protect the band received therein. The casing may be shaped as a box with a narrow rectangular bottom 7 and top 8, two large side walls 9, 10 and narrower front and rear walls 11, 12. The casing may optionally comprise a transparent window 13 provided on at least one of the large sidewall and/or top to enable to visualize the band of portions inside. The casing may further comprise at least one openable gate 14 for allowing the band to be progressively withdrawn from the casing during dispensing. The openable gate may be positioned in the top front corner of the casing, i.e. at the intersection between the front wall 11 and top wall 8 or in other possible locations such as lower in the front wall or more rearward in the top wall. The openable gate forms a passage 15 (or opening 15). The size of the passage is at least sufficient to allow the band to be extracted, e.g. delayered or unwound, with one portion 2 of beverage precursor at a time. Preferably the size of the passage is adapted to the size of a single portion and is preferably slightly larger. The band can so be progressively advanced e.g. in a stepwise manner as the portions are individually removed from the band by the dispensing machine and the other portions are held in place in the protecting casing.

The openable gate 14 may be, for example, a hinged cover or corner part of the casing but it may take may various configurations such as a slider, a flap, a valve, a tappet, a drawer or a simple opening.

Optionally, the protective casing 6 may comprise a weakening line 168 provided at its front wall 11 longitudinally to allow the wall to be separated in two parts 169, 170 as will be explained later.

The casing may be optional and the package may also be formed of solely the portioned band 3.

Such portioning band 3 is illustrated in a first aspect in Figures 2 and 3. The band comprises a pair of packaging sheets 4, 5 which are sealed to one another and encloses a plurality of beverage portions 2.

The beverage portions are preferably spherical. In the present application, the term "spherical" encompasses also designs such as multiple facets (e.g. like a "football" shape) or a sphere having truncated faces of diameter less than the diameter of the sphere or slightly ovoid or oval or egg shapes. A preferred shape is however a ball with circular cross-sections.

The band is preferably symmetrical with the sheets being sealed on an equatorial plane (P) of the beverage portions.

The sheets are formed of oxygen impervious material such as a laminate including at least one gas barrier layer. The material forming the sheets (all films and layers) is compostable. The term "compostable" means that the material is substantially broken down within a few months or weeks when it is industrially composted. The material is at least about 90% composted under specific conditions within six months as determined by the method of ISO14855 or EN13432.

The beverage portions 2 may be arranged in at least one row in the longitudinal axis A of the band and are spaced apart a constant distance "d". The sheets are preferably formed with hemi-spherical cavities 16, 17 for receiving the portions therein. These cavities of the sheets can be obtained by thermoforming. The forming of the cavities ensures that there is as less free space as possible between the portions and the sheets so that the chance of room for residual air is reduced.

The neighboring beverage portions 2 are separated from each other by a free part of sheets in such a manner that the ratio of the distance $d_c$ between the centre of the neighboring portions and the diameter $d_p$ of the portion is between 1.7 and 2.0, preferably 1.8 and 1.9, most preferably of about 1.88.

The thickness of the sheets must be determined as function of the material to ensure both a proper forming of the cavities 16, 17 as close as possible to the beverage portions and a possible opening such as by a cutting line 19. The cutting line is a virtual line where a cutting tool of the dispensing machine can apply cutting to enable the beverage portion to be removed and separated from the band. The cutting line is preferably located at the intersection between one formed cavity 16, 17 and the free part 22 of the band. The cutting line could also be a weakening line where the sheet or band is weakened (e.g. reduction of thickness) such as by laser compared to the rest of the sheet or band.

As illustrated in Figures 1 and 4, the band is continuous but arranged, e.g. bent, into several superimposed layers 18a-j of determined width "D". For example, five beverage portions are arranged per band and ten layers are arranged in the casing for a total number of 50 portions of beverage precursor. Each beverage portion may contain a few grams of beverage precursors, for example 5 to 6 grams, corresponding to at least one serve of beverage. The beverage precursor is preferable essentially roast-and-ground coffee. The beverage precursor may also comprise a mix of roast-and-ground coffee and soluble coffee or roast-and ground coffee and milk powder. For example, one portion may be suitable for preparing one cup of coffee.

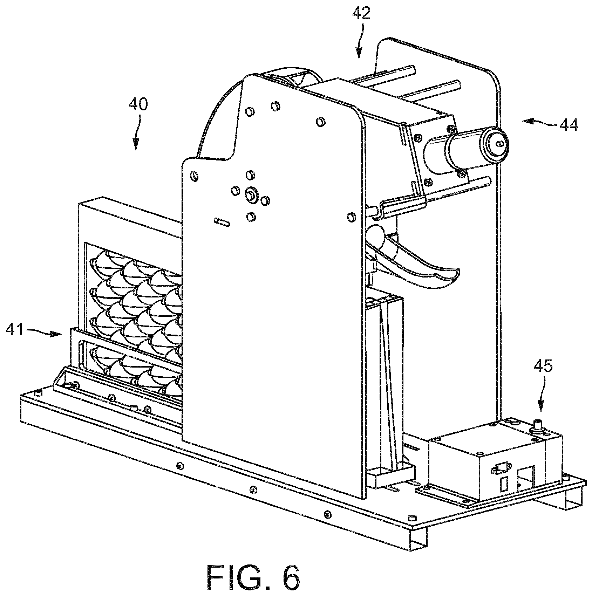

The portion dispensing machine 40 of the invention is illustrated in relation to Figures 6 to 21.

The beverage portion dispenser of the invention comprises a receiving seat 41 and means 42 for collecting and dispensing the beverage precursor portions. The package can be received in the receiving seat 41 of the machine in a position enabling the openable gate 14 to be close to the collecting and dispensing means 42 of the machine.

The collecting and dispensing means 42 may comprise a portion drive assembly 43 arranged for catching one end of the flexible portioning band 3 and a separating assembly 44 for individually separating each portion from the portioning band. The portion drive assembly 43 and separating assembly 44 are controlled by control means 100 comprising a control unit 101 which coordinates the motion of the portioning band in the dispenser, preferably in a stepwise manner by the drive assembly 43 and the operation of the separating assembly 44 for removal of the beverage precursor portions.

*Portion drive assembly:*

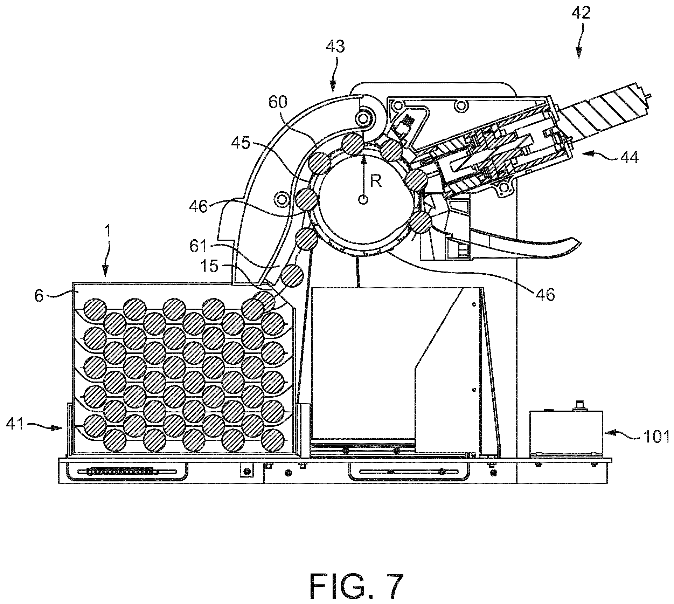

The portion drive assembly 43, as illustrated in Figures 7 to 10, may comprise a driving wheel or drum 45 provided with a plurality of portion receiving cavities 46 arranged in circumferential alignment formed in the outer annular surface of the driving wheel or drum. The driving wheel 45 is driven in rotation in a stepwise fashion by a driving member 47. The driving wheel 45 is mounted around an axle 48 of transversal axis I. The receiving cavities 46 are individually dimensioned and arranged at distance one another so as to match with the distance d between the neighbouring beverage portions of the band. As the portions are captured by the receiving cavities 46 moving step-wisely, the portioning band 3 is progressively withdrawn from the casing 6.

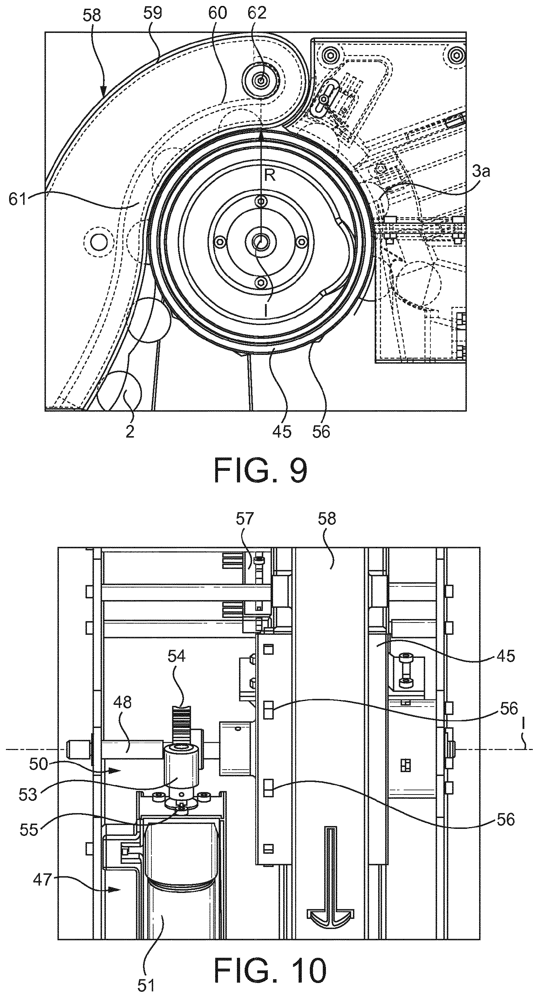

The radius R of the driving wheel (Figure 9) can be determined as function of the distance *dc* between the centre of the portions.

$$R = n.(r.dp/2\pi)$$

With *n* represents the total number of receiving cavities. *dp* is the diameter of a beverage precursor portion. *r* represents the ratio of the distance *dc* between the centre of the neighbouring portions and the diameter *dp* of the portions. Preferably, the ratio *r* is comprised between 1.7 and 2, more preferably between 1.8 and 1.9, most preferably of about 1.88.

The value of the ratio *r* may be obtained empirically by "trials and error" with the aim to ensure a proper storage of the band before use in several layers like a serpentine while the portions of two neighboring layers come arranged in quincunx.

The number of receiving cavities n should be chosen sufficient to allow the portioning band to be entrained by the driving wheel on a minimal number of cavities. Preferably, the driving wheel acts on a minimal number of at least 2, preferably 3, 4 or 5 receiving cavities. As a result, the driving of the portion is accurate and the pulling force is distributed over more than one portion only which reduces the risk of damaging the portions. For example, the total number of receiving cavities is of between 4 and 12, preferably of 6 to 9..

As shown in Figure 10, the axle 48 of the wheel is preferably coupled to a drive member 47 comprising an electrical motor 50 coupled to the driving wheel by a transmission system 51, for example a combination of a geared wheel 54 and endless screw 53 linked to the shaft 55 of the motor.

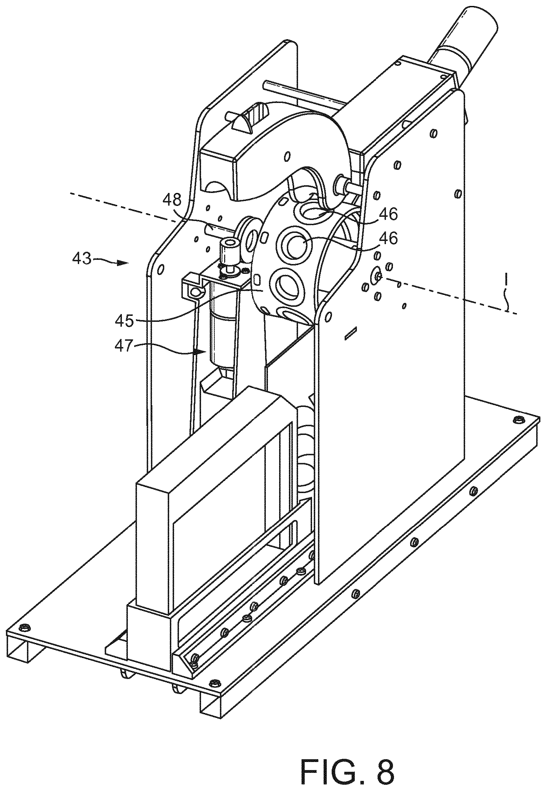

The driving wheel is controlled by the control unit 101 for moving incrementally of a path corresponding to the distance between the centre of the portions. For this, the driving wheel may comprising positioning members 56, e.g. in relief or in recess, which are sensed by a position sensor 57. The position sensor may be a mechanical sensor which mechanically detects the presence of the positioning members or an optical sensor such as a laser. Other sensors can be envisaged such as magnetic, electrical or inductive sensors. Therefore, the driving wheel is moved of one increment as a result of the detection of each positioning member by the position sensor. The sensed input is provided by the sensor to the control unit which, in return, commands the drive member 47. The positioning members are so advantageously spaced apart or distributed of a distance equivalent to the distance between the spacing cavities of the portions. For example, the positioning members 56 are transversally aligned with the centre of the cavities 46 (Figure 8).

It should be noted that an additional sensor may be positioned to detect the presence of a portion in a receiving cavity (not illustrated). This portion presence sensor may be used to indicate the start and/or end of the band for example.

The portion drive assembly may further comprise a guide means 58 arranged in relation to the receiving seat 41 and/or opening 15 of the package for guiding the portioning band and beverage precursor portions onto the rotary driving wheel to ensure that the portions are properly guided into the receiving cavities. The guiding means 58 may be arranged with an arm 59 and a top guiding surface 60 positioned a close distance from the cavities and the portions 2 fitted therein. The arm may further comprise side guiding surfaces 61 for guiding the portions laterally. The arm may be hinged along a transversal axle 62, e.g. placed on the top of the arm, for allowing the arm to be disengaged from the portioning band for replacing or exchanging the package. The guiding means further act as a protection for the user and renders the inside of the dispenser inaccessible during use. For this, a position sensor (not illustrated) may be provided to detect the position of the guiding means. If the guiding means is opened, an input signal is sent to the control unit by the position sensor to ensure the command of other devices of the dispenser (e.g. motors) is inactivated or deactivated.

*Separating assembly:*

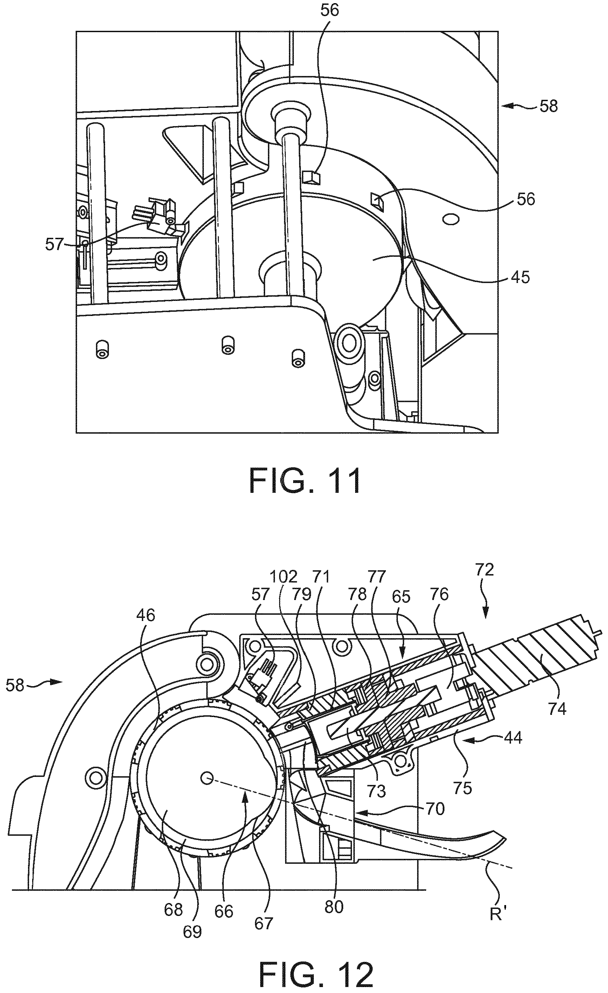

The collecting and dispensing means 42 further comprises a separating assembly 44, a first variant of 3a which is illustrated on Figure 12. The separating assembly essentially comprises a cutting tool 65 and an extracting member 66. The cutting tool is arranged for at least partially cutting an opening in the band about the forefront sealed portion 3a present in the portion drive assembly (Figure 9).

The extracting member 66 has for function to assist the removal of the portion from the receiving cavity after the cutting operation took place. Such member may be a pushing member as illustrated or other equivalent means such as a vacuum extraction means that pulls the portion from the receiving cavity rather than push it outside. The extracting member may also be optional. In the preferred mode, the pushing member may comprise a cam surface 67 protruding from a stationary disc member 68 positioned coaxially with the driving wheel 45. In this configuration, the annular wall of the driving wheel is formed with traversing receiving cavities 46 with the inner surface of the annular wall forming a gap 69 with the disc member 68 to allow sufficient room for each beverage precursor portion to sit in. The gap is interrupted by the protruding member with its protruding cam surface close to the inner surface of the annular wall. The cam surface is positioned at a strategic location past the cutting tool, e.g. at an angle of 10-30° after it, and preferably is placed in radial alignment direction R' with a portion collecting means 70.

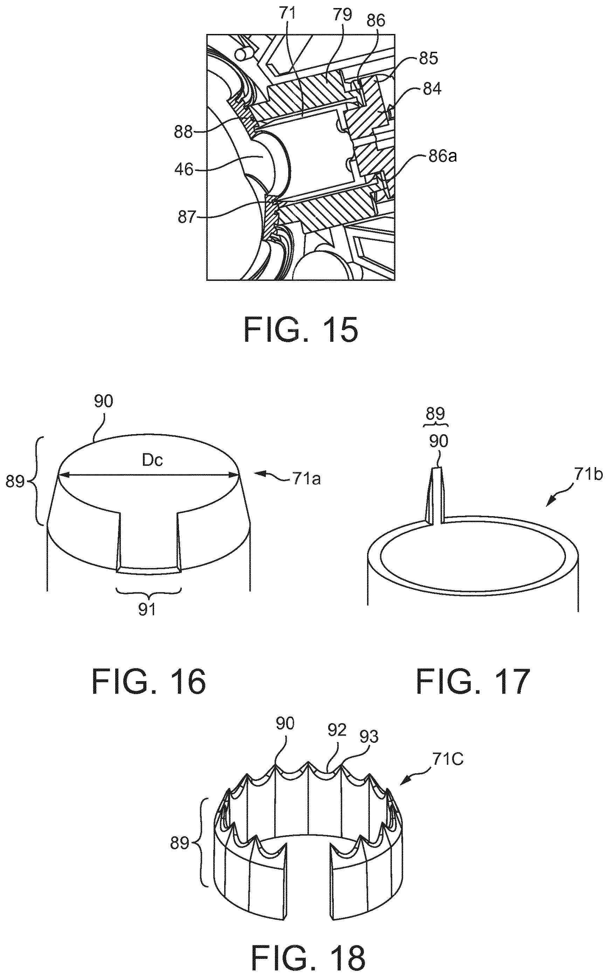

A first mode of the cutting tool is presented in Figure 12. The cutting tool comprises a cutter 71 arranged for being able to cut at least a cutting line 19 (Figure 2) in the band. For this, the cutter may be configured as a cylinder of diameter $Dc$ slightly larger than the diameter $dp$ of the beverage precursor portions (Figure 16). The cutting tool is arranged for moving the cutter reciprocally between a rest position and a cutting position. The position illustrated on Figure 12 is a rest position. The cutter is moved by a cutter drive assembly which may be, in a preferred configuration, a motorized piston assembly 72 but could also take other equivalent forms. The motorized piston assembly is commanded by the control unit to position the cutter between the two positions. Such actuation is coordinated with the incremental motion of the driving wheel which is controlled by the position sensor 57.

The motorized piston assembly may comprise an endless screw 73 fixed to an electrical motor 74 also fixed in a stationary manner to a housing 75 of the assembly. The endless screw may be coupled to the motor via an optional coupling part 76. The screw drives a reciprocally movable nut 77 which is stopped in rotation in the housing. The movable nut is mobile in axial direction of the assembly thereby actuating the cutter 19 reciprocally between the two positions depending on the rotational sense of the motor or screw. The nut may be coupled to an optional forefront piece 78. The cutting tool may further comprise a pressing member 79 coaxially mounted around the cutter 71 which is also displaced together with the cutter. The arrangement and operation of the pressing member is explained in relation to the second mode later. The cutter is guided in the housing such as via side longitudinal guides 80 to ensure the cutter is moved translationally without rotation. When the cutter is in the cutting position, the pressing member 79 presses on the surface of the driving wheel to maintain the band in place and facilitate the cutting operation.

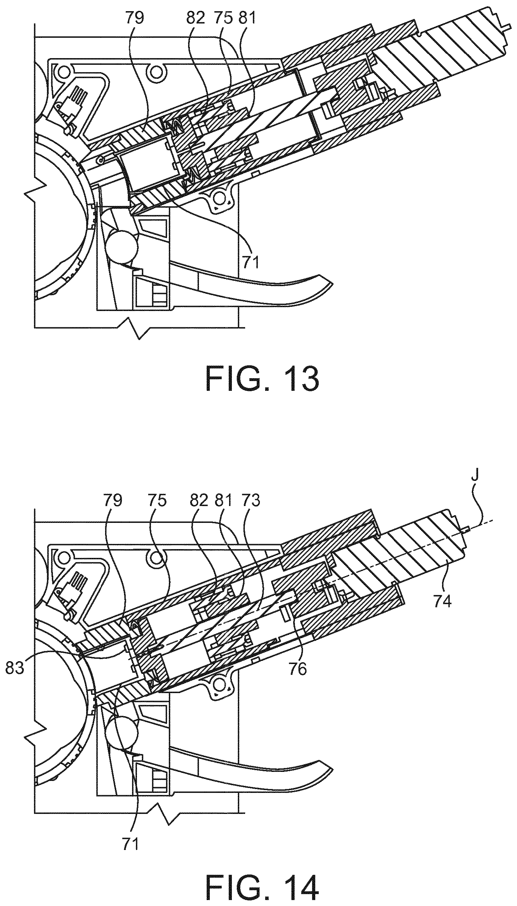

A second mode of the cutting tool is illustrated in relation to Figures 13 to 15. With this system the cutter 71 moves with a combined rotational and translational movement in the housing 75 which may facilitate the cutting operation. In this mode, the endless screw 73 is coupled to a stationary nut 81 fixed to the housing such as via connection members 82. The endless screw is coupled at its first end to the electrical motor and optional coupling member 76 which are also slidably mounted in the housing to move axially and reciprocally (direction J) with the screw. At its second end, the screw is coupled to the cutter 71 and optional pressing member 79. The screw may be fixedly connected to the cutter such as via connection means 83. As the screw is moved in a combined axial and rotational movement, the cutter is forced in the same movement from one position to other and vice versa. The pressing member 79 is mounted coaxially with the cutter. An intermediate activation ring member 84 is arranged between the screw and the cutter to force the pressing member 79 in pressing contact when the cutter is moved to the cutting position, such as by a shoulder 85 acting on a contact wall 86 of the pressing member. When the cutter is retracted from the cutting position, the pressing member 79 is retracted with retard owing to the coaxial sliding arrangement of the two. An elastic biasing means 86a may be further provided between the activation ring member 84 and the cutter to ensure an elastic contact of the pressing ring on the driving wheel and to promote the retard effect when the cutter is moved back towards its rest position.

In the two modes, the driving wheel may be provided with a circular groove 87 located about the receiving cavity 46 to receive a free end of the cutter to increase the shear of the cutter on the band. A coaxial groove 88 may also be provided on the driving wheel to receive a free end of the pressing member.

Figures 16 to 18 represents different modes of cutters which can possibly be used in the cutting tool of the dispenser of the invention.

In the mode of Figure 16, the cutter 71a comprises a circumferentially long cutting portion 89 with a continuous cutting edge 90 extending on at least an angle of 280 degrees, preferably at least 300 degrees. The cutting portion is interrupted by a cutout portion 91 such as at an angle of about 10-80 degrees. In this mode, the cutter is particularly adapted to the first mode of the cutting tool of Figure 12 in which the cutter is axially moveable but blocked in rotation.

In the mode of Figure 17, the cutter 71b comprises a circumferentially short cutting portion 89 with a short cutting edge 90. The cutting portion 89 may extend circumferentially on an angle of 5-20 degrees for example. This mode is particularly adapted to the second mode of the cutting tool of Figures 13-15 in which the cutter is moved both axially and rotationally.

In the mode of figure 18, the cutter 71c comprises a cutting portion 89 which has a tooth-shaped cutting edge with a succession of recesses 92 and peaks 93. The cutting portion may extend on all or part of the circumference of the cutter. For example, the cutting portion extends partly on the circumference such as on 300-320 degree angle. This mode is suitable for the two modes of the cutting tool.

*Portion collecting means*

As aforementioned, the portion dispensing machine may further comprise a portion collecting means 70, such as a chute and the like, arranged for gently receiving and transporting by gravity or otherwise (e.g. air pressure), the beverage portion to a dispensing area where a beverage brewing system or machine may be provided (not illustrated).

*Collection of used band*

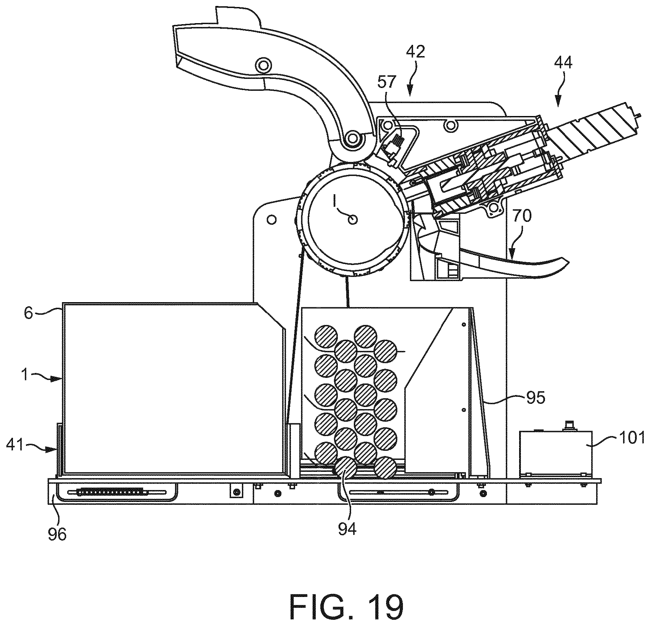

Figures 19 to 21 illustrate the portion dispensing machine 40 when the beverage portions have been removed from the band and dispensed and the used band 94 is collected in a waste container 95 below the collecting and dispensing means 42.

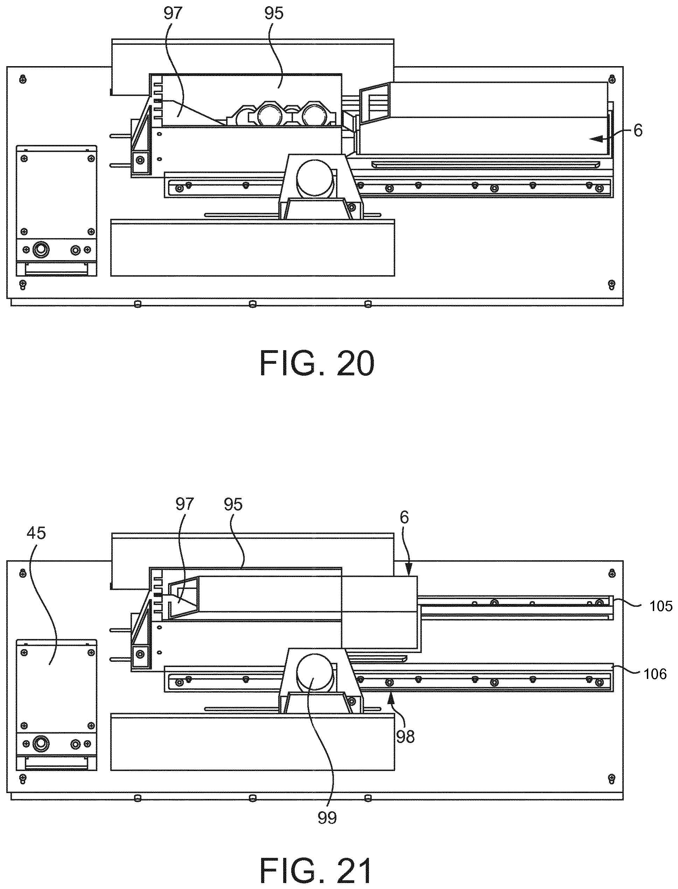

The receiving seat 41 may be mounted on a frame 96 of the machine in a linearly moveable manner between a dispensing position in which the package is positioned to feed the collecting and dispensing means 42 with the band (Figure 19) and a waste collecting position in which the casing 6 of the package collects the used band from the collecting container (Figure 21).

In particular, the receiving seat 41 may slide linearly along one or preferably a pair of side rails 105, 106 to enter at least partially in the waste container 95. The waste container 95 may comprise opening means 97 arranged for opening the protective casing 6 of the package. The opening means may be for instance a pusher which forces the used (empty) band in the protective casing. The weakening line 168 of the casing may have the form of an inverted T (or the like) to ensure the pusher can break the front wall and separate it into two equal portions such as in the manner of a "saloon door". The front wall may be arranged with the rest of the casing to provide an elastic return in closed position of the wall after removal of the pusher. As a result, the used band is securely maintained in the casing for being discarded, composted or recycled.

The receiving seat may be moved between the two positions by means of an actuator 98 comprising a motor 99. The control unit may command the displacement of the seat in the waste collecting position when the portion sensor no longer detects the presence of a portion in the cavity or after a number of increments. Alternatively or additionally, the receiving seat can be moved manually.

*Assembly of dispensers*

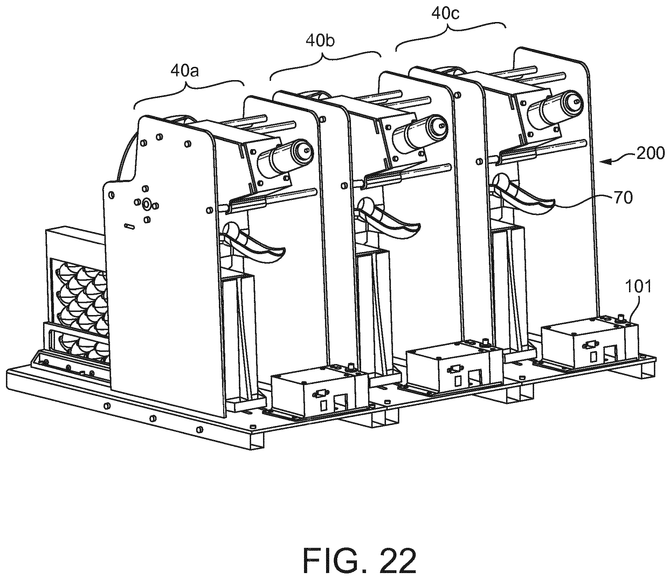

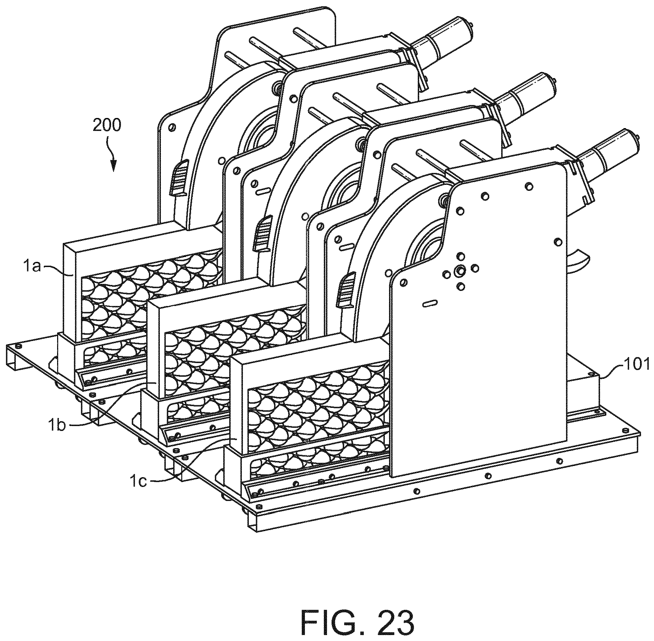

Figures 22 and 23 illustrate the assembly 200 comprising beverage portion dispensers 40a, 40b, 40c. The dispensers may be arranged side-by-side with each a collecting means 70. The collecting means may merge to a common collecting means. Each dispenser may comprise its own control unit 101 but preferably a common control unit is provided that command the dispensers in a coordinated manner (not illustrated). The dispenser may receive beverage precursor packages 1a, 1b, 1c including same or different beverage precursor portions such as different blends and/or origins of roast-and-ground coffee. For instance, package 1a comprises coffee portions more suitable for espresso or ristretto coffee beverages, package 1b comprises coffee portions for lungo and package 1c comprises coffee portions more suitable for large coffee beverages or comprise other than coffee ingredients such as compacted milk powder.

*Detection or identification of beverage precursor portions:*

The beverage precursor portions may be associated with detection or identification elements 102 positioned strategically on the band to provide information to the apparatus. The detection or identification element 102 can be detected and/or identified by a detecting and/or identifying member 103 of the apparatus. The detection or identification elements may be of optical ID element such as a barcode, design, glyph or magnetic ID element or electrically conductive ID element. The detecting and/or identifying member 103 of the apparatus may be an optical reader (e.g. camera, light beam, etc.) or an inductive detector or electrodes adapted to the type of detection or identification element 102. In a preferred mode, the detection or identification element 102 is an optical element (e.g. barcode) and the detecting and/or identifying member 103 is an optical reader (Figure 12). The detection or identification element 102 may be a single element on the band or may be multiple like, for example, a repeated element between the neighboring beverage precursor portions such as illustrated on Figure 2. When several elements are present, the elements can be identical or different so as to provide same or different information to the apparatus. In the illustrated mode, each detection or identification element 102 is positioned, e.g. printed or applied otherwise, in the free part 22 of the band.

The detection or identification element 102 may provide information such as: the type of beverage precursor portions, the number of portions on the band, the counting of the portions on the band and any combinations thereof. For example, the detection or identification element 102 has a serial number which is unique to one band or to multiple bands. The serial number may inform the device of the number of remaining number of portions in the band and/or may be used for traceability reasons. A counting of the beverage precursor portions may be enabled. The counting may enable convenient user functionalities such as the automatic reordering of new packages.

## Claims

1. Beverage portion dispenser (40) for receiving a flexible portioning band (3) containing a plurality of individually sealed beverage precursor portions (2) for the preparation of a beverage wherein the dispenser comprises:

   - a receiving seat (41) for receiving the portioning band;
   - means (42) for individually collecting and dispensing the beverage precursor portions (2) to a dispensing area,

   wherein the collecting and dispensing means (42) comprises:

   - a portion drive assembly (48) arranged for receiving a part of the portioning band (3) which sealingly encloses spaced apart beverage precursor portions, for individually taking a number of sealed beverage precursor portions (2) in charge and for moving said sealed portions step-wisely;
   - a separating assembly (44) for individually separating said portions from the portioning band as they are moved to the separating assembly by the portion drive assembly, wherein the portion drive assembly (48) comprises a drive member (47) comprising portion receiving cavities (46) shaped for individually catching a number of portions (2) and for moving the respective part of the portioning band containing the caught portions to the separating assembly (44), wherein the drive member (47) comprises a driving wheel (45) with a cylindrical wall provided with portion receiving cavities (46) spaced apart at its at its circumference and a motor (50) for driving the wheel (45) in rotation along an axis (I) transversal to the driving direction of the portioning band and the drive member (47) is arranged with control means (100) to move the driving wheel incrementally or step-wisely of one step at a time to position one receiving cavity containing a beverage precursor portion next to the separating assembly (44), wherein the driving wheel (45) comprises positioning members (56) arranged incrementally on the driving wheel (45) to cooperate with at least one position sensor (57), wherein the separating assembly (44) comprises a cutting tool (65) for opening the portioning band (3) at the location of each individual beverage precursor portion, **characterized in that** the cutting tool (65) comprises a cutter (71) arranged for cutting at least one cutting line (19) in the portioning band (3) around the beverage precursor portion, with a diameter of the cutting line (19) being larger than the diameter of the beverage precursor portion (dp), wherein the cutter (71) has a hollow form with at least one arc-shaped cutting edge (90), and wherein the cutter (71) is driven reciprocally by a motorized piston assembly (72) between a retracted position and a cutting position.

2. Beverage portion dispenser according to claim 1, wherein the radius (R) of the driving wheel (45) is a function of the number (n) of receiving cavities, the distance (dc) between the centres of neighbouring beverage precursor portions on the portioning band and the diameter (dp) of the beverage precursor portions.

3. Beverage portion dispenser according to claim 1 or 2, wherein the cutter (71) is driven via an endless screw (73) axially coupled to a motor to be moved axially or helically relative to the driving wheel.

4. Beverage portion dispenser according to claim 3, wherein the cutting tool (65) further comprises a pressing member (79) coaxially mounted with the cutter (71) to hold the portioning band on the driving wheel as the cutter cut the portioning band.

5. Beverage portion dispenser according to any of the preceding claims 1 to 4, wherein the separating assembly (44) comprises an extracting member (66) arranged for engaging against the beverage precursor portion after the portioning band has been cut by the cutting tool.

6. Beverage portion dispenser according to claim 5, wherein the extracting member (66) is formed as a stationary protruding surface positioned angularly after the cutting tool and inside the driving wheel so that when the driving wheel is driven in rotation and a cavity filled with a portion comes in radial alignment with the extracting member (66), the portion abuts against the protruding surface and is forced outside the cavity of the driving wheel.

7. Beverage portion dispensing system comprising a dispenser (40) as claimed in any of the preceding claims and a package (1) comprising at least one portioning band (3) with beverage precursor portions (2) individually sealed therein.

8. Beverage portion dispensing system according to claim 7, wherein the beverage precursor portions (2) are of spherical shape.


**Patentansprüche**

1. Getränkeportionsspender (40) zum Aufnehmen eines flexiblen Portionierbands (3), das eine Vielzahl von einzeln versiegelten Getränkevorläuferportionen (2) für die Zubereitung eines Getränks enthält, wobei der Spender umfasst:

   - einen Aufnahmesitz (41) zum Aufnehmen des Portionierbands;
   - ein Mittel (42) zum einzeln Sammeln und Ausgeben der Getränkevorläuferportionen (2) zu einem Ausgabebereich,

   wobei das Sammel- und Ausgabemittel (42) umfasst:

   - eine Portionsantriebsanordnung (48), die zum Aufnehmen eines Teils des Portionierbands (3) eingerichtet ist, wobei beabstandete Getränkevorläuferportionen versiegelt umschlossen werden, zum einzeln Übernehmen einer Anzahl versiegelter Getränkevorläuferportionen (2) und zum schrittweisen Bewegen der versiegelten Portionen;
   - eine Trennanordnung (44) zum einzeln Trennen der Portionen von dem Portionierband, während sie durch die Portionsantriebsanordnung zu der Trennanordnung bewegt werden,

   wobei die Portionsantriebsanordnung (48) ein Antriebselement (47) umfasst, umfassend Portionsaufnahmehohlräume (46), die zum einzeln Auffangen einer Anzahl von Portionen (2) und zum Bewegen des jeweiligen Teils des Portionierbands, der die aufgefangenen Portionen enthält, zu der Trennanordnung (44) geformt sind, wobei das Antriebselement (47) ein Antriebsrad (45) mit einer zylindrischen Wand, versehen mit Portionsaufnahmehohlräumen (46), die an seinem Umfang beabstandet sind, und einen Motor (50) zum Antreiben des Rads (45) in Rotation entlang einer Achse (I), die zu der Antriebsrichtung des Portionierbands quer verläuft, umfasst, und das Antriebselement (47) mit Steuermitteln (100) eingerichtet ist, um das Antriebsrad inkrementell oder schrittweise um einen Schritt nach dem anderen zu bewegen, um einen Aufnahmehohlraum, der eine Getränkevorläuferportion enthält, neben der Trennanordnung (44) zu positionieren, wobei das Antriebsrad (45) Positionierungselemente (56), die auf dem Antriebsrad (45) inkrementell eingerichtet sind, um mit mindestens einem Positionssensor (57) zusammenzuwirken, umfasst, wobei die Trennanordnung (44) ein Schneidwerkzeug (65) zum Öffnen des Portionierbands (3) an der Stelle jeder einzelnen Getränkevorläuferportion umfasst, **dadurch gekennzeichnet, dass** das Schneidwerkzeug (65) einen Schneider (71), der zum Schneiden mindestens einer Schnittlinie (19) in das Portionierband (3) um die Getränkevorläuferportion eingerichtet ist, umfasst, wobei ein Durchmesser der Schnittlinie (19) größer als der Durchmesser der Getränkevorläuferportion (dp) ist, wobei der Schneider (71) eine hohle Form mit mindestens einer bogenförmigen Schneidkante (90) aufweist, und wobei der Schneider (71) durch eine motorisierte Kolbenanordnung (72) zwischen einer zurückgezogenen Position und einer Schneidposition hin und her angetrieben wird.

2. Getränkeportionsspender nach Anspruch 1, wobei der Radius (R) des Antriebsrads (45) von der Anzahl (n) von Aufnahmehohlräumen, von dem Abstand (dc) zwischen den Mittelpunkten benachbarter Getränkevorläuferportionen auf dem Portionierband und dem Durchmesser *(dp)* der Getränkevorläuferportionen abhängig ist.

3. Getränkeportionsspender nach Anspruch 1 oder 2, wobei der Schneider (71) über eine Schnecke (73), die mit einem Motor axial gekoppelt ist, um relativ zu dem Antriebsrad axial oder schraubenförmig bewegt zu werden, angetrieben wird.

4. Getränkeportionsspender nach Anspruch 3, wobei das Schneidwerkzeug (65) ferner ein Druckelement (79), das mit dem Schneider (71) koaxial montiert ist, um das Portionierband auf dem Antriebsrad zu halten, während der Schneider das Portionierband schneidet, umfasst.

5. Getränkeportionsspender nach einem der vorstehenden Ansprüche 1 bis 4, wobei die Trennanordnung (44) ein Extraktionselement (66), das zum Ineingriffnehmen gegen die Getränkevorläuferportion eingerichtet ist, nachdem das Portionierband durch das Schneidwerkzeug geschnitten wurde, umfasst.

**6.** Getränkeportionsspender nach Anspruch 5, wobei das Extraktionselement (66) als eine stationäre vorstehende Oberfläche ausgebildet ist, die nach dem Schneidwerkzeug und in dem Antriebsrad winklig positioniert ist, sodass, wenn das Antriebsrad in Rotation angetrieben wird und ein Hohlraum, der mit einer Portion gefüllt ist, in radiale Ausrichtung mit dem Extraktionselement (66) kommt, die Portion gegen die vorstehende Oberfläche stößt und aus dem Hohlraum des Antriebsrads heraus gedrängt wird.

**7.** Getränkeportionsausgabesystem, umfassend einen Spender (40) nach einem der vorstehenden Ansprüche und eine Packung (1), umfassend mindestens ein Portionierband (3) mit darin einzeln versiegelten Getränkevorläuferportionen (2).

**8.** Getränkeportionsausgabesystem nach Anspruch 7, wobei die Getränkevorläuferportionen (2) von sphärischer Form sind.

**Revendications**

**1.** Distributeur de portions de boisson (40) permettant de recevoir une bande de portions flexibles (3) contenant une pluralité de portions de précurseur de boisson scellées individuellement (2) pour la préparation d'une boisson, dans lequel le distributeur comprend :

> - un siège de réception (41) permettant de recevoir la bande de portions ;
> - des moyens (42) permettant de collecter et de distribuer individuellement les portions (2) de précurseur de boisson dans une zone de distribution,

dans lequel les moyens de collecte et de distribution (42) comprennent :

> - un ensemble d'entraînement de portions (48) agencé pour recevoir une partie de la bande de portions (3) qui entoure de manière étanche des portions espacées de précurseur de boisson, permettant de prendre individuellement en charge un certain nombre de portions scellées (2) de précurseur de boisson et de déplacer lesdites portions scellées par échelons ;
> - un ensemble de séparation (44) destiné à séparer individuellement lesdites portions de la bande de portions à mesure qu'elles sont déplacées vers l'ensemble de séparation par l'ensemble d'entraînement de portions,
>
>> dans lequel l'ensemble d'entraînement de portion (48) comprend un élément d'entraînement (47) comprenant des cavités de réception de portions (46) profilées pour attraper individuellement un nombre de portions (2) et pour déplacer la portion respective de la bande de portions contenant les portions capturées vers l'ensemble de séparation (44),

dans lequel l'élément d'entraînement (47) comprend une roue motrice (45) à paroi cylindrique pourvue de cavités de réception de portion (46) espacées au niveau de sa circonférence et un moteur (50) destiné à entraîner la roue (45) en rotation le long d'un axe (I) transversal à la direction d'entraînement de la bande de portions et l'élément d'entraînement (47) est agencé avec des moyens de commande (100) pour déplacer la roue motrice progressivement ou par échelons à un temps pour positionner une cavité de réception contenant une portion de précurseur de boisson à côté de l'ensemble de séparation (44),

dans lequel la roue motrice (45) comprend des éléments de positionnement (56) agencés de manière incrémentielle sur la roue motrice (45) pour coopérer avec au moins un capteur de position (57),

dans lequel l'ensemble de séparation (44) comprend un outil de coupe (65) pour ouvrir la bande de portions (3) à l'emplacement de chaque portion individuelle de précurseur de boisson, **caractérisé en ce que**

l'outil de coupe (65) comprend un organe de coupe (71) agencé pour couper au moins une ligne de coupe (19) dans la bande de portions (3) autour de la portion de précurseur de boisson, avec un diamètre de la ligne de coupe (19) étant plus grand que le diamètre de la portion de précurseur de boisson (dp),

dans lequel l'organe de coupe (71) a une forme creuse avec au moins un bord de coupe en forme d'arc (90), et

dans lequel l'organe de coupe (71) est entraîné réciproquement par un ensemble piston motorisé (72) entre une position rétractée et une position de coupe.

**2.** Distributeur de portions de boisson selon la revendication 1, dans lequel le rayon (R) de la roue motrice (45) est fonction du nombre (*n*) de cavités de réception, de la distance (*dc*) entre les centres de portions de précurseur de boisson voisines sur la bande de portions et du diamètre (*dp*) des portions de précurseur de boisson.

**3.** Distributeur de portions de boisson selon la revendication 1 ou 2, dans lequel l'organe de coupe (71) est entraîné par une vis sans fin (73) accouplée axialement à un moteur à déplacer axialement ou hélicoïdalement par rapport à la roue motrice.

4. Distributeur de portions de boisson selon la revendication 3, dans lequel l'outil de coupe (65) comprend en outre un élément de pression (79) monté coaxialement avec l'organe de coupe (71) pour maintenir la bande de portions sur la roue motrice pendant que l'organe de coupe coupe la bande de portions.

5. Distributeur de portions de boisson selon l'une quelconque des revendications précédentes 1 à 4, dans lequel l'ensemble de séparation (44) comprend un élément d'extraction (66) agencé pour venir en prise contre la portion de précurseur de boisson après que la bande de portions a été coupée par l'outil de coupe.

6. Distributeur de portions de boisson selon la revendication 5, dans lequel l'élément d'extraction (66) est formé en tant que surface saillante stationnaire positionnée angulairement après l'outil de coupe et à l'intérieur de la roue motrice, de sorte que lorsque la roue motrice est entraînée en rotation et qu'une cavité remplie d'une portion vient en alignement radial avec l'élément d'extraction (66), la portion vient en butée contre la surface saillante et est forcée à l'extérieur de la cavité de la roue motrice.

7. Système de distribution de portions de boisson comprenant un distributeur (40) selon l'une quelconque des revendications précédentes et un emballage (1) comprenant au moins une bande de portions (3) avec des portions (2) de précurseur de boisson individuellement scellées à l'intérieur de celle-ci.

8. Système de distribution de portions de boisson selon la revendication 7, dans lequel les portions (2) de précurseur de boisson sont de forme sphérique.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

**EP 3 794 565 B1**

FIG. 20

FIG. 21

23

FIG. 22

24

FIG. 23

**EP 3 794 565 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3607297 A
- WO 9320737 A
- GB 2362634 A
- EP 1541070 B
- US 9241499 B2
- US 3686820 A